# EUROPÄISCHE PATENTSCHRIFT

(11) **EP 2 486 302 B1**
(45) Veröffentlichungstag und Bekanntmachung des Hinweises auf die Patenterteilung: **09.03.2016**
(21) Anmeldenummer: 10743040.7
(22) Anmeldetag: 11.08.2010
(51) Int. Cl.: B60G 7/00, B60G 13/14, F16F 15/03, F16H 49/00

(54) **ELEKTRISCHER DÄMPFER**
ELECTRIC DAMPER
AMORTISSEUR ÉLECTRIQUE

(30) Priorität: 09.10.2009 DE 102009048818
(43) Veröffentlichungstag der Anmeldung: 15.08.2012
(73) Patentinhaber: Audi AG, 85045 Ingolstadt (DE)
(72) Erfinder: WILLEMS, Marco, 85053 Ingolstadt (DE)
(74) Vertreter: Asch, Konrad
(86) Internationale Anmeldenummer: PCT/EP2010/004895
(87) Internationale Veröffentlichungsnummer: WO 2011/042085

(56) Entgegenhaltungen:
- DE-A1- 10 115 858
- DE-A1-102006 022 543
- DE-C1- 10 137 230
- DE-C1- 19 747 566
- JP-A- 3 239 619
- JP-A- 4 203 630
- JP-A- 2007 046 695

## Beschreibung

Die Erfindung betrifft einen elektrischen Dämpfer zum Dämpfen der Relativbewegung zwischen einer ersten und einer zweiten Masse, umfassend einen durch die Massenbewegung angetriebenen Generator.

Es ist in vielen Bereichen der Technik erforderlich, Relativbewegungen zwischen zwei Bauteilen eines schwingungsfähigen mechanischen Systems zu dämpfen. Ein Beispiel, das jedoch keinesfalls beschränkend ist, ist die Schwingungsdämpfung an einer Kraftfahrzeugkarosserie im Bereich der Aufhängung der Karosserie am Fahrwerk. Hierzu werden vornehmlich hydraulische Dämpfer eingesetzt. Diese sind jedoch nicht in der Lage, die beim Dämpfen dem System entzogene Energie zu gewinnen respektive nutzbar zu machen.

Hierzu ist aus DE 101 15 858 A1 ein elektrischer Dämpfer bekannt, der einen Generator einsetzt, der durch die Massenbewegung angetrieben wird. Ein Generator umfasst bekanntlich einen Stator und einen relativ zu diesem drehbaren Rotor sowie entsprechende Magnetfelderzeugungsmittel, wobei bei Drehung des Rotors relativ zum Stator aufgrund der Drehbewegung im Magnetfeld ein Strom erzeugt wird, mithin also Energie gewonnen wird. D. h., dass einerseits eine Dämpfung infolge der zur Durchführung der Drehbewegung im Magnetfeld aufzubringenden Energie erfolgt, zum anderen wird die Energie in Form des generatorseitig erzeugten Stroms, der entsprechend ins Bordnetz eingespeist werden kann, genutzt.

Bei dem aus DE 101 15 858 A1 bekannten System ist der Generator karosserieseitig befestigt, d. h., der Stator ist karosseriefest an einem ersten Dämpferteil angeordnet. Der Rotor ist über ein Getriebe, beispielsweise eine Kudelgewindespindel, mit dem relativ zum ersten Dämpferteil linear beweglichen zweiten Dämpferteil verbunden. Die Gewindespindel ist in einer fest in diesem zweiten Dämpferteil verbundenen Gewindemutter aufgenommen. Bei einer Linearbewegung des zweiten Dämpferteils wird die Gewindespindel gedreht, so dass es zur Rotorrotation kommt. Hierdurch kann zwar eine gewisse Vergrößerung des Verhältnisses zwischen Rotationsbewegung und Linearbewegung des Dämpfers erzielt werden, jedoch ist das dort beschriebene System sehr aufwendig konzipiert, darüber hinaus ist die über das Getriebe erfolgende Umwandlung der Linearbewegung in die Rotationsbewegung fehleranfällig.

Ein ähnlicher Dampfer mit aus der JP 2007-46695 bekannt.

Der Erfindung liegt damit das Problem zugrunde, einen elektrischen Dämpfer anzugeben, der demgegenüber einfacher konzipiert und funktionssicher ist.

Zur Lösung dieses Problems ist ein elektrischer Dämpfer der eingangs genannten Art vorgesehen, bei dem der Generator in ein Getriebe integriert ist, wobei ein einen Stator bildendes erstes Getriebeelement durch die Massebewegung in Drehung versetzt wird, worüber ein einen Rotor bildendes zweites Getriebeelement, das mit dem ersten Getriebeelement direkt oder indirekt übersetzt gekoppelt ist, gedreht wird, wobei am ersten oder am zweiten Getriebeelement Mittel zur Erzeugung eines Magnetfelds vorgesehen sind.

Beim erfindungsgemäßen elektrischen Dämpfer ist mit besonderem Vorteil der Generator direkt in das Getriebe integriert, diesem also nicht wie im Stand der Technik bekannt nachgeschaltet. Dies lässt die Konfiguration einer sehr klein bauenden Einheit zu. Darüber hinaus ist das Funktionsprinzip des erfindungsgemäßen Dämpfers verglichen mit dem aus dem Stand der Technik bekannten Dämpfer vollkommen neu. Der Stator selbst ist kein feststehendes Bauelement, vielmehr wird er im Betrieb selbst aktiv gedreht. D. h., dass er in irgendeiner Form direkt oder indirekt mit einer der bewegten Massen gekoppelt ist, derart, dass er bei einer Massenbewegung in Rotation versetzt wird. Aus dieser Rotation resultiert infolge der über die Getriebeübersetzung gegebenen direkten oder indirekten Kopplung des Stators zwangsläufig die Rotation des den Rotor bildenden zweiten Getriebeelements, das, wenn am Stator die Magnetfelderzeugungsmittel vorgesehen sind, im Magnetfeld dreht, wodurch es zur rotorseitigen Stromerzeugung in hierfür vorgesehenen Stromerzeugungsmitteln kommt. D. h., dass hier ausschließlich Rotationsbewegungen genutzt respektive in das Dämpfungssystem eingeleitet werden, die die Dämpfung über den Generator respektive die Generatorfunktion sowie die Rückgewinnung der Dämpfungsenergie in Form des generatorseitig erzeugten Stroms ermöglichen. Infolge der Nutzung eines solchen Getriebes kann darüber hinaus auch eine relativ große, letztlich vom Übersetzungsverhältnis abhängige Relativbewegung zwischen Stator und Rotor erreicht werden, die noch dadurch vergrößert werden kann, wenn das Getriebe so ausgelegt ist, dass die Drehrichtung des ersten Getriebeelements entgegengesetzt zur Drehrichtung des zweiten Getriebeelements ist. D. h., dass beide in unterschiedliche Richtungen drehen, wodurch der Relativweg zwischen beiden während dieser Drehbewegung noch größer wird als bei gleichförmiger Drehrichtung. Durch die gegensätzliche Bewegung des Stators wird zwangsläufig auch die Relativgeschwindigkeit zwischen den magnetfeld- respektive stromerzeugenden Elementen des Stators und des Rotors erhöht. Insgesamt wird durch diese entgegengesetzte Drehbewegung ein glättender Effekt der Dämpfung erzielt, gleichzeitig wird der Wirkungsgrad erhöht. Die Felderzeugungsmittel können entweder am Stator vorgesehen sein, so dass der Strom rotorseitig generiert wird. Alternativ können die Felderzeugungsmittel auch im Rotor vorgesehen sein, so dass die Stromgeneration am Stator in dort vorgesehenen Stromerzeugungsmitteln erfolgt.

Am Stator, also dem ersten Getriebeelement, selbst können als Felderzeugungsmittel entweder mehrere Wicklungen vorgesehen sein, die eine Fremderregung zulassen, d. h., dass diese Wicklungen zur Erzeugung des Magnetfelds zu bestromen sind. Alternativ ist es auch denkbar, am Stator mehrere permanentmagnetische Elemente zur Eigenerregung vorzusehen. Am Rotor, dem zweiten Getriebeelement, selbst sind als Stromerzeugungsmittel mehrere Wicklungen zur Führung des erzeugten Stroms vorgesehen, d. h., dass dort der Strom induziert wird. Über die Wicklungen kann der Strom abgegriffen und beispielsweise ins Bordnetz eines Kraftfahrzeugs, an dem der Dämpfer verbaut ist, eingespeist werden. Selbstverständlich ist auch eine umgekehrte Anordnung der stromerzeugenden Teile möglich, das heißt, dass die das Magnetfeld erzeugenden Wicklungen oder Permanentmagnete auch am Rotor und die Indüktionswicklungen am Stator vorgesehen sein können.

Als Getriebe können unterschiedliche Getriebetypen eingesetzt werden. Nach einer ersten Erfindungsausgestaltung kann das Getriebe ein Spannungswellengetriebe sein, das häufig auch als Harmonic-Drive-Getriebe bezeichnet wird. Ein solches Spannungswellengetriebe umfasst eine das erste Getriebeelement bildende ring- oder zylinderförmige flexible Einheit mit einer Außenverzahnung, eine starre Einheit mit einer mit der Außenverzahnung der flexiblen Einheit kämmenden Innenverzahnung und ein im Inneren der flexiblen Einheit angeordnetes, mit der flexiblen Einheit, diese deformieren, zusammenwirkendes und das zweite Getriebeelement bildendes ovales Drehelement auf. An der flexiblen Einheit, üblicherweise auch als Flex-Spline bezeichnet, befinden sich entweder die felderzeugenden Wicklungen oder die felderzeugenden permanentmagnetischen Elemente, die Flex-Spline bildet den Stator. Die starre Einheit, üblicherweise auch als Circular-Spline bezeichnet, stellt ein Getriebegehäusebauteil dar und ist, relativ zum Stator und zum Rotor, lagefest angeordnet. Die Flex-Spline greift mit ihrer Außenverzahnung in die Innenverzahnung der Circular-Spline ein, wobei die Zahnanzahlen jedoch, wie bei Spannungswellengetrieben üblich, unterschiedlich sind. Schließlich ist ein ovales Drehelement, das den Rotor bildet, vorgesehen, das mit der flexiblen Einheit, diese deformierend und dadurch in bekannter Weise den Zahneingriff respektive die Winkellage des Zahneingriffs zwischen Außenverzahnung der Flex-Spline und der Innenverzahnung der Circular-Spline ändernd, zusammenwirkt.

Wird nun der Stator fest mit einem schwenkbar gelagerten Bauteil, beispielsweise einem Querlenker oder dergleichen, der bei einer Einfederbewegung geschwenkt wird, verbunden, so kommt es zu einer Verdrehung der Flex-Spline relativ zur Circular-Spline, woraus wiederum eine infolge der Veränderung der Deformation der Flex-Spline resultierende Drehung des ovalen Drehelements, also des Rotors, resultiert. Der Drehwinkel der Flex-Spline, also des Stators, beträgt z. B. ¼ - ½ Umdrehung, der Rotor dreht übersetzungsbedingt mehrmals um volle 360°. Der Getriebebetrieb ist hier also, verglichen mit üblichen Anwendungen eines Harmonic-Drive-Getriebes, bei denen aktiv das Drehelement gedreht und die Flex-Spline quasi als Abtrieb fungiert, umgekehrt.

Damit das ovale Drehelement möglichst leicht auf dem Stator, also der Flex-Spline abwälzt, ist zweckmäßigerweise zwischen dem ersten und dem zweiten Getriebeelement ein flexibles Wälzlager, insbesondere ein Rollen- und Nadellager angeordnet. Hierüber kann die Reibung zwischen diesen beiden Getriebeelementen stark reduziert werden.

Ein alternativ verwendbarer Getriebetyp ist ein Planetengetriebe. Dieses umfasst ein das erste Getriebeelement bildendes Hohlrad, mit diesem kämmendie Planetenräder, die lagefest an einem entsprechenden Getriebegehäusebauteil vorgesehen sind, sowie ein mit den Planetenrädern kämmendes, das zweite Getriebeelement bildendes Sonnenrad. Das Hohlrad bildet also den Stator, der über die Masse, an die er beispielsweise über einen Querlenker oder ähnliches gekoppelt ist, etwas gedreht wird. Über die Statordrehung erfolgt infolge der Kopplung über die Planetenräder dann die übersetzte Drehung des den Rotor bildenden Sonnenrades, wobei sich der Rotor natürlich innerhalb des zylindrischen oder ringförmigen Hohlrades befindet, so dass es zur Dämpfung in Verbindung mit einer Stromerzeugung kommt.

Eine dritte Getriebeart, die beim erfindungsgemäßen Dämpfer eingesetzt werden kann, ist ein Zykloidgetriebe. Dieses besteht aus einer das erste Getriebeelement bildenden ring- oder zylinderförmigen Einheit, die mit einer randseitig zahnartig profilierten Kurvenscheibe verbunden ist, die ihrerseits mit einem zahnartig profilierten feststehenden Gehäuseteil kämmt, wobei an der Kurvenscheibe, vorzugsweise in einer Bohrung, das in das erste Getriebeelement eingreifendes zweites Getriebeelement angeordnet ist. Auch ein solches Zykloidgetriebe lässt eine hohe Übersetzung zu, so dass die geringe Winkeldrehung des ersten Getriebeelements, also des Stators, hoch übersetzt auf den Rotor, also das zweite Getriebeelement übertragen werden kann. Das zweite Getriebeelement ist hier exzentrisch an einer außenseitig wellenförmig profilierten Kurvenscheibe angeordnet, die sich innerhalb eines feststehenden Gehäuseringes, der eine entsprechende Gegenverzahnung aufweist, dreht, jedoch in dieser radial beweglich ist. Mit der Kurvenscheibe ist ferner das erste Getriebeelement, also die ring- oder zylinderförmige Einheit gekoppelt, die entsprechende Kopplungszapfen aufweist, die in vom Durchmesser her größere Bohrungen der Kurvenscheibe eingreift, so dass diese bei drehachsfester Anordnung des ersten Getriebeelements, also des Stators, die Radialbewegung durchführen kann. Auch die Funktion eines solchen Zykloidgetriebe ist hinlänglich bekannt, wobei die Integration des Generators auch hier zu einer sehr guten, geglätteten Dämpfung führt.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Explosionsansicht eines erfindungsgemäßen Dämpfers einer ersten Ausführungsform,
- Fig. 2: den Dämpfer aus Fig. 1 in einer zusammengebauten Ansicht,
- Fig. 3: eine Stirnansicht des Dämpfers aus Fig. 2,
- Fig. 4: einen in einen Kipphebel eingebauten Dämpfer,
- Fig. 5: eine Prinzipdarstellung einer möglichen Verbausituation eines Dämpfers im Bereich einer Kraftfahrzeugachse,
- Fig. 6: eine Explosionsdarstellung eines Dämpfers einer erfindungsgemäßen zweiten Ausführungsform.
- Fig. 7: eine Prinzipdarstellung des zusammengebauten Dämpfers aus Fig. 6,
- Fig. 8: eine Explosionsansicht eines erfindungsgemäßen Dämpfers einer dritten Ausführungsform, und
- Fig. 9: eine Perspektivansicht des zusammengebauten Dämpfers aus Fig. 8.

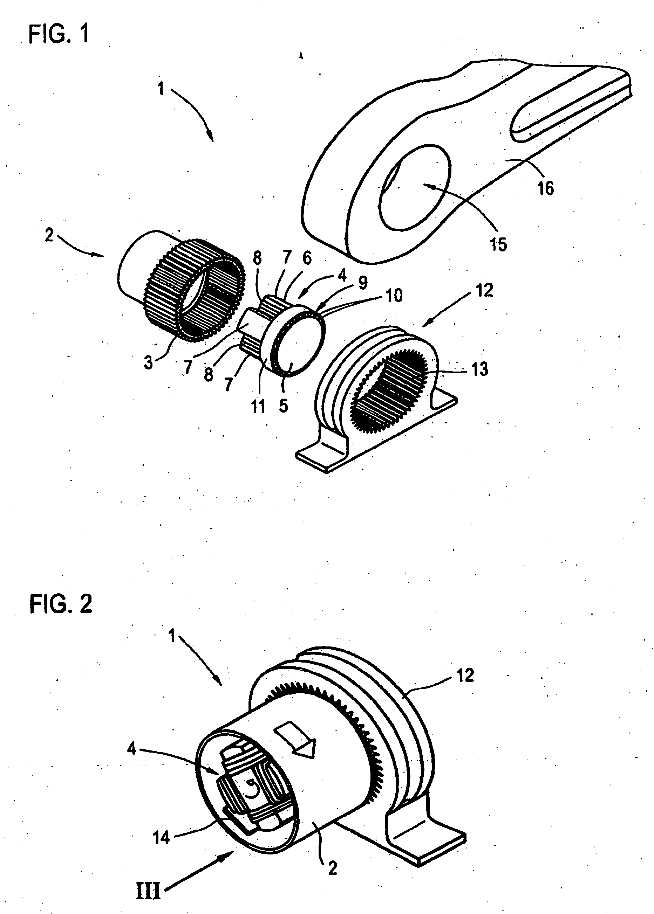

Fig. 1 zeigt eine Explosionsansicht eines erfindungsgemäßen elektrischen Dämpfers 1 einer ersten Ausführungsform. Dieser besteht letztlich aus einem Getriebe, in das unmittelbar ein Generator integriert ist. Der Dämpfer umfasst ein erstes Getriebeelement 2, das einen Stator bildet und mit Mitteln zur Erzeugung eines Magnetfelds versehen ist. Dieses erste Getriebeelement 2 wird bei dem hier dargestellten Getriebe, einem Spannungswellengetriebe (auch Harmonic-Drive-Getriebe genannt) von einer zylindrischen flexiblen Hülse, der sogenannten Flex-Spline gebildet, die an ihrer Außenseite eine Verzahnung 3 aufweist. An der Innenseite sind hier nicht näher gezeigte Permanentmagnete für eine mögliche Eigenerregung oder Wicklungen für eine mögliche Fremderregung zur Magnetfelderzeugung vorgesehen.

Ein zweites Getriebeelement 4 bildet den Rotor, wobei dieses zweite Getriebeelement 4 durch eine Drehung der Flex-Spline selbst in Drehung versetzt wird. Hierzu verfügt das zweite Getriebeelement 4 über ein ovales, scheibenförmiges Drehelement 5, an dem ein länglicher Körper 6 angeordnet ist, der wiederum mehrere Abschnitte 7 aufweist, auf denen Wicklungen 8, in die bei einer Drehbewegung Strom induziert wird, angeordnet sind. Auf dem ovalen Drehelement 5 ist ein flexibles Wälzlager 9 umfassend mehrere rollen- und nadelförmige Wälzkörper 10 sowie eine flexible ringförmige Lagerabdeckung 11 angeordnet. In der Montagestellung ist das zweite Getriebeelement 4 in das erste Getriebeelement 2 eingesetzt, derart, dass das Wälzlager 9 respektive die flexible Abdeckung 11 an der Innenseite des Abschnitts des ersten Getriebeelements, der mit der Außenverzahnung 3 versehen ist, anliegt. Über dieses ovale Drehelement 5 in Verbindung mit dem Wälzlager 9 wird das erste Getriebeelement 2, also die Flex-Spline, oval verformt, dem ovalen Drehelement 5 kommt die Funktion eines Wave-Generators, wie er üblicherweise vorgesehen ist.

Ferner eine starre Einheit 12, die fest mit einem Drittgegenstand zu verbinden ist. Sie weist eine zentrale Durchbrechung mit einer Innenverzahnung 13 auf, mit dem die Außenverzahnung 3 des ersten Getriebeelements 2, also der Flex-Spline, kämmt. Diese starre Einheit 12 bildet die Circular Spline, wie sie von einem Harmonic Drive-Getriebe her bekannt ist. Nachdem die Innenverzahnung 3 weniger Zähne und einen etwas kleineren Durchmesser als die Außenverzahnung 13 aufweist, kommt es in an sich bekannter Weise bei einer Drehbewegung bei üblichen Harmonic Drive-Getrieben durch den Flex-Generator, hier also das Drehelement 5, zu einer Rotation der Flex-Spline. Bei dem erfindungsgemäßen Dämpfer ist die Funktionsweise jedoch umgekehrt, hier erfolgt eine Drehung des ersten Getriebeelements 2, also der Flex-Spline, die infolge der Getriebeübersetzung zu einer wesentlich größeren Drehung des zweiten Getriebeelments 4, hier also des Rotors, führt.

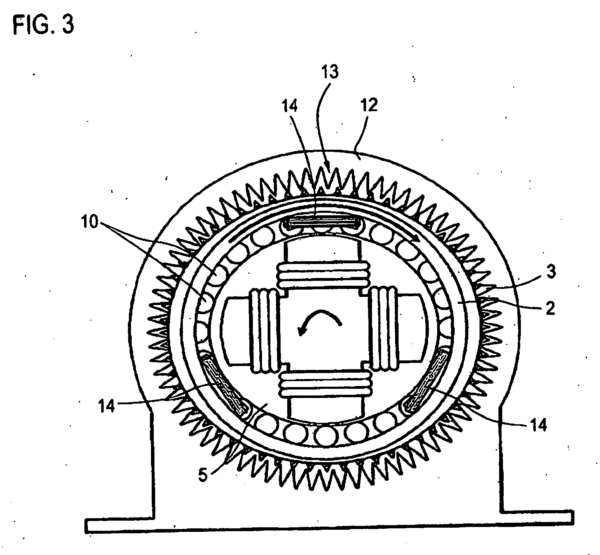

Fig. 2 und 3 zeigen den Dämpfer 1 in montierter Stellung. Ersichtlich befindet sich das zweite Getriebeelement 4 respektive der Rotor im Inneren des ersten Getriebeelements 2, hier also des Stators, an dessen Innenseite exemplarisch eine Wicklung 14 zur Magnetfelderzeugung dargestellt ist. Die Außenverzahnung 3 des ersten Getriebeelements 2 greift in die Innenverzahnung 13 der feststehenden, starren Einheit 12 ein. Dies ergibt sich deutlich aus der Darstellung gemäß Fig. 3, die eine Stirnansicht des elektrischen Dämpfers 1 aus Fig. 1 zeigt. In dieser Stirnansicht ist neben der starren Einheit 12 auch die flexible Einheit 2 dargestellt, bei der man zunächst auf die Stirnfläche blickt. Das gegenüberliegende, die Verzahnung aufweisende Ende dieses flexiblen ersten Getriebeelements ist jedoch durch das ovale Drehelement 5 oval verformt, so dass es hier im Verzahnungsbereich ebenfalls horizontal orientiert oval verformt wird und in diesem Bereich die Außenverzahnung 3 in die Innenverzahnung 13 eingreifen kann, während ersichtlich im Bereich der vertikalen Verformungsachse die Verzahnung 3 nicht im Eingriff mit der Verzahnung 13 steht. Die Verformung erfolgt über das ovale Drehelement 5, das wie beschrieben über die nadel- oder rollenförmigen Wälzlager 10 und die außenringartige Auflage 11 gegen die Innenwand des die Außenverzahnung 3 aufweisenden Abschnitts drückt.

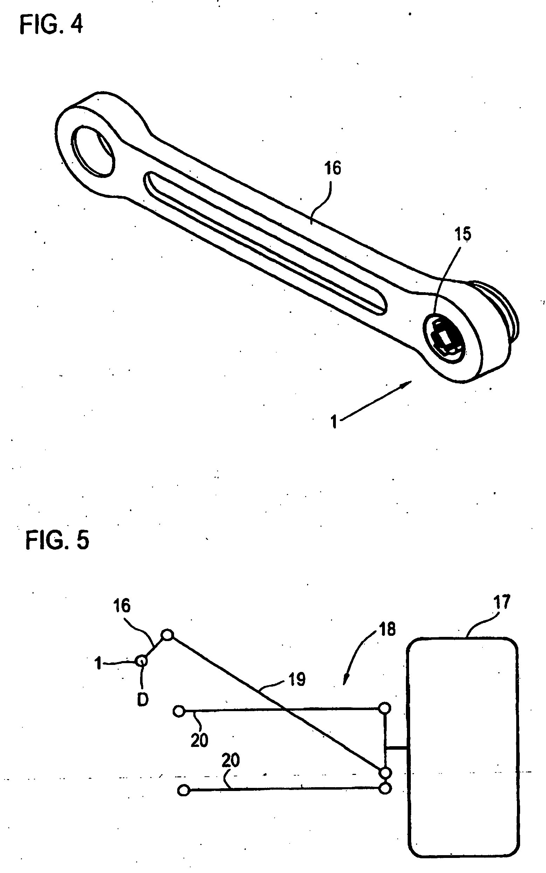

In der Montagestellung, wie sie exemplarisch in Fig. 4 gezeigt ist, ist der Dämpfer 1 mit dem ersten Getriebeelement in eine Bohrung 15 eines Hebelements 16 eingesetzt, siehe hierzu Fig. 4. Das erste Getriebeelement 2, also der Stator respektive die Flex-Spline, ist fest mit dem Hebelelement 16 verbunden, so dass bei einer Drehung um die Bohrungsachse das erste Getriebeelement aktiv über den Hebel 16 gedreht wird. Diese Hebeldrehung und daraus resultierend die Drehung des ersten Getriebeelements 2 führt nun dazu, dass es über die Verzahnungskopplung zwangsläufig zu einer erzwungenen Drehung des ovalen Drehelements 5 und über dieses des gesamten zweiten Getriebeelements 4 kommt, so dass sich mithin die Windungen 8 im erzeugten Magnetfeld des ersten Getriebeelements 2, also des Stators, drehen und es folglich zu einer Strominduktion kommt. Infolge der Integration in das Getriebe und der gegebenen Getriebeübersetzung ist der Winkel, den das zweite Getriebeelement 4 verglichen mit der aktiven Drehung des ersten Getriebeelements 2 durchführt, wesentlich größer, im Übrigen sind die beiden Drehbewegungen einander entgegengesetzt, wie durch die Pfeile in den Figuren 2 und 3 dargestellt ist. Hieraus folgt zwangsläufig eine beachtliche Relativdrehung beider Elemente zueinander, wobei die Rotordrehung ein Vielfaches der Statordrehung ausmacht. Beispielsweise kann eine Drehung des ersten Getriebeelements 2, also der Flex-Spline, um 90° in eine übersetzte Rotorbewegung im Bereich von 3 - 5 Vollumdrehungen umgewandelt werden. Hier kommen also reine Drehbewegungen zur Dämpfung und Stromerzeugung zum Einsatz. Die Dämpfungswirkung beruht darauf, dass sich der Rotor, also das zweite Drehgetriebeelement 4, im Magnetfeld des ersten Getriebeelements 2 dreht, wobei die dem System entzogene Energie nicht verloren geht, sondern zu einem beachtlichen Teil eben durch Induktion des Stroms zurück gewonnen wird.

Eine mögliche Bausituation zeigt Fig. 5. Gezeigt ist als Teil eines Kraftfahrzeugs ein Rad 17 nebst Radträger 18, an dem eine Schiebestange 19 angeordnet ist, die beispielsweise mit dem Hebelelement 16 verbunden ist. Das Hebelelement 16 ist um die Drehachse D schwenkgelagert, wobei sich in dieser Drehachse D der erfindungsgemäße Dämpfer 1 befindet. Denkbar wäre es selbstverständlich auch, diesen Dämpfer 1 unmittelbar in die Drehaufhängungen eines oder beider Querlenker 20, wie sie exemplarisch dargestellt sind, zu integrieren. In jedem Fall wird der Stator, also das erste Getriebeelement 2, immer mit dem Antrieb verbunden, er ist das getriebene Element, während der Rotor, also das zweite Getriebeelement 4, stets das getriebene Element ist. Federt nun das Rad 17 ein oder aus, wird das Hebelelement 16 über die Schiebestange 19 bewegt, so dass es um die Drehachse D dreht, worüber der erfindungsgemäße Dämpfer 1 in der beschriebenen Weise betrieben wird.

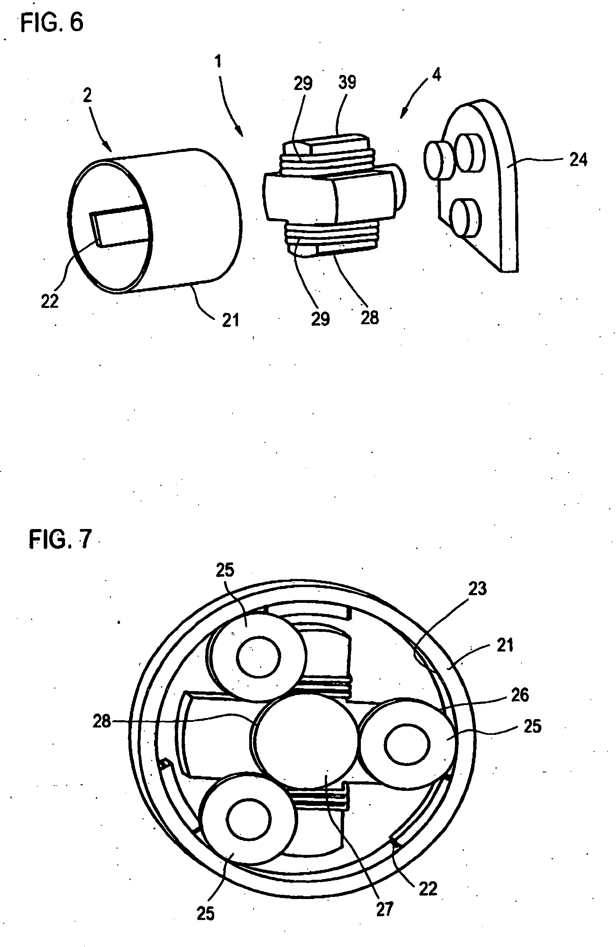

Eine zweite erfindungsgemäße Ausführungsform eines Dämpfers 1 zeigen die Figuren 6 und 7, wobei gleiche Bezugszeichen für gleiche oder im wesentlichen gleiche Bauteile verwendet werden. Auch hier ist ein erstes Getriebeelement 2 vorgesehen, bei dem es sich, nachdem das Getriebe hier als Planetengetriebe ausgebildet ist, um ein Hohlrad 21 handelt. An der Innenseite des Hohlrades 21 sind wiederum Mittel zur Magnetfelderzeugung, beispielsweise auch hier wiederum Wicklungen 22, vorgesehen, wie auch eine nicht näher gezeigte Innenverzahnung 23. An einer starren, lagefesten Lagerung 24 sind im gezeigten Beispiel drei Planetenräder 25 drehgelagert, die jeweils über eine ebenfalls nicht näher gezeigte Außenverzahnung 26 mit der Innenverzahnung 23 des Hohlrades 21 kämmen.

Weiterhin ist ein Sonnenrad 27 vorgesehen, das Teil des zweiten Getriebeelements 4 ist und das über eine Außenverzahnung 28, ebenfalls nicht näher dargestellt, mit den Planetenrädern 25 kämmt. Am Sonnenrad 27 ist ein Fortsatz vorgesehen, an dem entsprechende Abschnitte 39 mit Wicklungen 29, in die bei einer Rotation im Magnetfeld Strom induziert wird, vorgesehen.

Im montierten Zustand befindet sich wiederum der Rotor, hier also das zweite Getriebeelement 4, im zylindrischen Stator, hier also dem ersten Getriebeelement 2. Wird nun der Dämpfer 1 wie beispielsweise in Fig. 1 bezüglich der ersten Ausführungsform gezeigt in eine zylindrische Bohrung eines Schwenkhebels 16 eingesetzt und das erste Getriebeelement 2 fest mit dem Schwenkhebel 16 verbunden, so kommt es bei einer Hebelrotation um die Drehachse des Getriebes dazu, dass auch das erste Getriebeelement 2, also der Stator, gedreht wird. Infolge der Übersetzung über die verschiedenen miteinander kämmenden Räder kommt es zu einer Rotation des Sonnenrades 27 und mithin zu einer Rotation des gesamten zweiten Getriebeelements 4. Die Wicklungen 29 rotieren im Magnetfeld, das über die Wicklungen 22 des Stators erzeugt wird, so dass es wiederum zu einer Stromerzeugung kommt. Auch hier ist die Rotationsrichtung der drehenden Elemente, nämlich des ersten und des zweiten Getriebeelements 2, 4 entgegengesetzt. Auch bei dieser Erfindungsausgestaltung kann eine sehr gute Dämpfung verbunden mit einer Rückgewinnung der dem System entzogenen Energie über den generierten Strom erreicht werden.

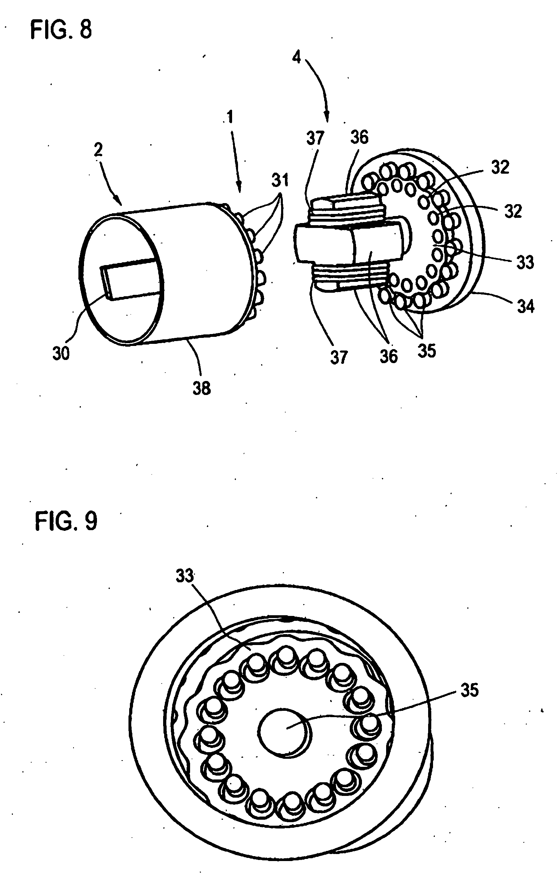

Eine dritte Erfindungsalternative eines elektrischen Dämpfers 1 mit einem Exzentergetriebe zeigen die Figuren 8 und 9. Auch hier ist ein erstes Getriebeelement 2, das den Stator bildet, vorgesehen. Es wird über eine zylindrische Hülse gebildet, an deren Innenseite wiederum Wicklungen 30 zur Magnetfelderzeugung vorgesehen sind. An der einen Stirnseite sind Zapfen 31 vorgesehen, die in vom Durchmesser her größere Bohrungen 32 einer Kurvenscheibe 33 eingreifen, die randseitig eine wellenförmige Profilierung aufweist, siehe Fig. 8. An einer starren, lagefesten Einheit 34 sind vorspringende Zapfen 35 vorgesehen, die nach Art einer Verzahnung mit der Profilierung der Kurvenscheibe 33 kämmen. In einer zentralen Bohrung der Kurvenscheibe 33 ist ein Zapfen 35 des zweiten Getriebeelements 4 drehfest aufgenommen, wobei an diesem Zapfen 35 wiederum ein Körper angeordnet ist, an dem an entsprechenden Absätzen 36 Wicklungen 37 angeordnet sind, die der Stromerzeugung dienen.

Bei einer Rotation des ersten Getriebeelements 2, das wiederum fest mit einem Schwenkhebel 16 oder dergleichen verbunden ist, kommt es zu einer aktiven Drehung der Kurvenscheibe 33, die randseitig mit den Zapfen 35, also der Verzahnung der starren Einheit 34, kämmt. Hierbei kommt es zu einer Drehung des zweiten Getriebeelements 4, wie dies von derartigen Exzenter- oder Zykloidgetrieben bekannt ist, wobei die Rotationsbewegung des zweiten Getriebeelements 4 infolge der Getriebeübersetzung eine wesentlich größere ist als die eingebrachte Rotationsbewegung des ersten Getriebeelements 2.

Zentrales Merkmal der erfindungsgemäßen unterschiedlichen Dämpferarten ist jeweils, dass der Generator unmittelbar in das Getriebe selbst integriert ist, unabhängig davon, welcher konkrete Getriebetyp eingesetzt wird. Ein weiteres zentrales Merkmal ist, dass stets der eigentliche Stator, also das Element, das das erregende Magnetfeld erzeugt, hier jeweils von dem hohlzylindrischen ersten Getriebeelement 1 gebildet, aktiv über einen Schwenkhebel oder ähnliches gedreht wird, wenn es zu einer Massenbewegung kommt, wie sie beispielsweise dann einsetzt, wenn bei Verbau in einem Kraftfahrzeug ein Rad einfedert. Über die jeweilige Getriebeübersetzung kommt es zu einer wesentlich größeren Rotationsbewegung des Ankers, gebildet von dem jeweiligen zweiten Getriebeelement, worüber eine entsprechend hohe Stromerzeugungsrate realisiert werden kann.

Während bei den beschriebenen Ausführungsbeispielen die Magnetfelderzeugung stets über statorseitig vorgesehene Mittel erfolgt, während der Strom rotorseitig generiert wird, ist auch eine umgekehrte Anordnung der stromerzeugenden Bauteile möglich, das heißt, dass die Magnetfelderzeugungsmittel am Rotor vorgesehen sind, während der Strom statorseitig in dortigen Wicklungen induziert wird.

## Patentansprüche

1. Elektrischer Dämpfer zum Dämpfen der Relativbewegung zwischen einer ersten und einer zweiten Masse, umfassend einen durch die Massenbewegung angetriebenen Generator,
**dadurch gekennzeichnet,**
**dass** der Generator in ein Getriebe integriert ist, wobei ein einen Stator bildendes erstes Getriebeelement (2) durch die Massebewegung in Drehung versetzt wird, worüber ein einen Rotor bildendes zweites Getriebeelement (4), das mit dem ersten Getriebeelement (2) direkt oder indirekt übersetzt gekoppelt ist, gedreht wird, wobei entweder am ersten oder am zweiten Getriebeelement (2, 4) Mittel (14, 22) zur Erzeugung eines Magnetfelds vorgesehen sind.

2. Dämpfer nach Anspruch 1,
**dadurch gekennzeichnet,**
**dass** am ersten Getriebeelement (2) als Felderzeugungsmittel mehrere Wicklungen (14, 22) zur Fremderregung oder mehrere permanentmagnetische Elemente zur Eigenerregung vorgesehen sind, und am zweiten Getriebeelement (4) mehrere Wicklungen zur Führung des erzeugten Stroms vorgesehen sind oder umgekehrt.

3. Dämpfer nach Anspruch 1 oder 2,
**dadurch gekennzeichnet,**
**dass** das zweite Getriebeelement (4) im Inneren des ring- oder zylinderförmigen ersten Getriebeelements (2) angeordnet ist, oder umgekehrt.

4. Dämpfer nach einem der vorangehenden Ansprüche,
**dadurch gekennzeichnet,**
**dass** die Drehrichtung des ersten Getriebeelements (2) entgegengesetzt zur Drehrichtung des zweiten Getriebeelements (4) ist.

5. Dämpfer nach einem der vorangehenden Ansprüche,
**dadurch gekennzeichnet,**
**dass** das Getriebe ein Spannungswellengetriebe ist, mit einer das erste Getriebeelement (2) bildenden ring- oder zylinderförmigen flexiblen Einheit mit einer Außenverzahnung (3), einer starren Einheit (12) mit einer mit der Außenverzahnung (3) der flexiblen Einheit kämmenden Innenverzahnung (13) und einem im Inneren der flexiblen Einheit angeordneten, mit der flexiblen Einheit, diese deformierend, zusammenwirkenden und das zweite Getriebeelement (4) bildenden ovalen Drehelement (5).

6. Dämpfer nach Anspruch 5,
**dadurch gekennzeichnet,**
**dass** zwischen dem ersten und dem zweiten Getriebeelement (2, 4) ein flexibles Wälzlager (10), insbesondere ein Rollen- oder Nadellager, angeordnet ist.

7. Dämpfer nach einem der Ansprüche 1 bis 4,
**dadurch gekennzeichnet,**
**dass** das Getriebe ein Planetengetriebe ist, mit einem das erste Getriebeelement (2) bildenden Hohlrad (21), mit diesem kämmenden Planetenrädern (25), und einem mit den Planetenrädern (25) kämmenden, das zweite Getriebeelement (4) bildenden Sonnenrad (27).

8. Dämpfer nach einem der Ansprüche 1 bis 4,
**dadurch gekennzeichnet,**
**dass** das Getriebe ein Zykloidgetriebe ist, mit einer das erste Getriebeelement (2) bildenden ring- oder zylinderförmigen Einheit (38), die mit einer randseitig zahnartig profilierten Kurvenscheibe (33) verbunden ist, die ihrerseits mit einem zahnartig profilierten feststehenden Gehäuseteil (34) kämmt, wobei an der Kurvenscheibe (33), vorzugsweise in einer Bohrung, das in das erste Getriebeelement (2) eingreifende zweite Getriebeelement (4) angeordnet ist.

## Claims

1. Electric damper for damping the relative movement between a first and a second mass, comprising a generator driven by the movement of mass, **characterised in that** the generator is integrated into a transmission, a first transmission element (2) which forms a stator being set into rotation by the movement of mass, by means of which rotation a second transmission element (4), which forms a rotor and is either directly or indirectly coupled in a transmission ratio to the first transmission element (2), is rotated, means (14, 22) for generating a magnetic field being provided either on the first or the second transmission element (2, 4).

2. Damper according to claim 1, **characterised in that** a plurality of windings (14, 22) for independent excitation or a plurality of permanent-magnetic elements for self-excitation are provided, in the form of means for generating a field, on the first transmission element (2) and a plurality of windings for guiding the generated current are provided on the second transmission element (4), or vice versa.

3. Damper according to either claim 1 or claim 2, **characterised in that** the second transmission element (4) is arranged inside the annular or cylindrical first transmission element (2), or vice versa.

4. Damper according to any of the preceding claims, **characterised in that** the direction of rotation of the first transmission element (2) is counter to the direction of rotation of the second transmission element (4).

5. Damper according to any of the preceding claims, **characterised in that** the transmission is a harmonic drive transmission comprising an annular or cylindrical flexible unit forming the first transmission element (2) and having external teeth (3), a rigid unit (12) having internal teeth (13) which mesh with the external teeth (3) of the flexible unit, and an oval rotary element (5) which is arranged inside the flexible unit, cooperates with and deforms the flexible unit, and forms the second transmission element (4).

6. Damper according to claim 5, **characterised in that** a flexible rolling bearing (10), in particular a roller bearing or a needle bearing, is arranged between the first and the second transmission element (2, 4).

7. Damper according to any of claims 1 to 4, **characterised in that** the transmission is a planetary gear set comprising a ring gear (21) which forms the first transmission element (2), planetary gears (25) meshing therewith, and a sun gear (27) which meshes with the planetary gears (25) and forms the second transmission element (4).

8. Damper according to any of claims 1 to 4, **characterised in that** the transmission is a cycloidal drive comprising an annular or cylindrical unit (38) which forms the first transmission element (2) and is connected to a cam disc (33), the edge of which is profiled in a toothed manner, which cam disc in turn meshes with a stationary housing part (34), which is profiled in a toothed manner, the second transmission element (4), which engages in the first transmission element (2), being arranged on the cam disc (33), preferably in a hole.

## Revendications

1. Amortisseur électrique pour amortir le mouvement relatif entre une première masse et une seconde masse, comprenant un générateur entraîné par le mouvement des masses,
**caractérisé en ce que** le générateur est intégré à un mécanisme, dans lequel un premier élément d'engrenage formant stator (2) est entraîné en rotation par le mouvement des masses, après quoi un second élément d'engrenage formant rotor (4), qui s'engrène directement ou indirectement sur le premier élément d'engrenage (2), est soumis à une rotation, dans lequel il est prévu sur le premier ou le second élément d'engrenage (2, 4) des moyens (14, 22) pour produire un champ magnétique.

2. Amortisseur selon la revendication 1,
**caractérisé en ce que** :
il est prévu sur le premier élément d'engrenage (2) comme moyens de production de champ plusieurs enroulements (14, 22) pour une excitation séparée ou plusieurs éléments magnétiques permanents pour une excitation propre et il est prévu sur le second élément d'engrenage (4) plusieurs enroulements pour acheminer le courant produit ou vice versa.

3. Amortisseur selon la revendication 1 ou la revendication 2,
**caractérisé en ce que** :
le second élément d'engrenage (4) est aménagé à l'intérieur du premier élément d'engrenage (2) de forme annulaire ou cylindrique, ou vice versa.

4. Amortisseur selon l'une quelconque des revendications précédentes,
**caractérisé en ce que** :
le sens de rotation du premier élément d'engrenage (2) est opposé au sens de rotation du second élément d'engrenage (4).

5. Amortisseur selon l'une quelconque des revendications précédentes,
**caractérisé en ce que** :
le mécanisme est une transmission d'ondes de tension, comprenant une unité flexible de forme annulaire ou cylindrique formant le premier élément d'engrenage (2) avec une denture externe (3), une unité rigide (12) avec une denture interne (13) en prise avec la denture externe (3) de l'unité flexible et un élément rotatif ovale (5) aménagé à l'intérieur de l'unité flexible, coopérant avec l'unité flexible qui se déforme et forme le second élément d'engrenage (4).

6. Amortisseur selon la revendication 5,
**caractérisé en ce que** :
on aménage entre le premier et le second élément d'engrenage (2, 4) un palier à roulement (10), en particulier un palier à rouleaux ou à aiguilles.

7. Amortisseur selon l'une quelconque des revendications 1 à 4,
**caractérisé en ce que** :
le mécanisme est un engrenage planétaire avec une roue creuse (21) formant le premier élément d'engrenage (2), des roues planétaires (25) en prise avec celle-ci et une roue solaire (27) formant le second élément d'engrenage (4) et en prise avec les roues planétaires (25).

8. Amortisseur selon l'une quelconque des revendications 1 à 4,
**caractérisé en ce que** :
le mécanisme est un engrenage cycloïdal, avec une unité de forme annulaire ou cylindrique (38) formant le premier élément d'engrenage (2), laquelle unité est reliée à une came (33) profilée en forme de dent sur le bord, laquelle came est en prise d'une part avec une partie de boîtier fixe (34) profilée en forme de dent, dans lequel on aménage sur la came (33), de préférence dans un alésage le second élément d'engrenage (4) qui est en prise avec le premier élément d'engrenage (2).
